(19) Europäisches Patentamt

European Patent Office

Office européen des brevets

(11) Veröffentlichungsnummer: **0 215 324**
A2

# (12) EUROPÄISCHE PATENTANMELDUNG

(21) Anmeldenummer: 86111570.7

(22) Anmeldetag: 21.08.86

(51) Int. Cl.⁴: **B 44 F 9/00,** B 44 F 9/04,
B 44 F 11/00, B 44 F 1/08,
B 44 F 1/06, B 32 B 17/10,
B 44 F 1/00

(30) Priorität: 19.09.85 DE 3533463

(43) Veröffentlichungstag der Anmeldung: 25.03.87
Patentblatt 87/13

(84) Benannte Vertragsstaaten: AT DE FR GB IT

(71) Anmelder: D. Swarovski & Co.,
Postfach 15 Swarovskistrasse 36, A-6112 Wattens/Tirol
(AT)

(72) Erfinder: Pöll, Martin, Hubertusweg 5a, A-6122 Fritzens
(AT)
Erfinder: Horngacher, Johann, Unterdorf 7,
A-6122 Fritzens (AT)

(74) Vertreter: Kador . Klunker . Schmitt-Nilson . Hirsch,
Cornelliusstrasse 15, D-8000 München 5 (DE)

(54) **Effektmaterial.**

㊽ Durch die Erfindung wird ein Effektmaterial (1) geschaffen, das aus mindestens zwei Schichten aus durchsichtigem Material (2) besteht, die jeweils mit einer transparenten farbigen Effektschicht (5) versehen sind. Mit diesem Effektmaterial können Naturstrukturen von z.B. Opal sehr gut imitiert werden, aber auch Phantasiestrukturen dargestellt werden.

EP 0 215 324 A2

Die Erfindung bezieht sich auf ein Effektmaterial, mit dem Naturstrukturen imitiert werden können, wie z. B. die Struktur von Opal oder Tigerquarz oder auch Phantasiestrukturen dargestellt werden können.

Effektmaterialien, bei denen Effektschichten auf durchsichtigen Materialien aufgebracht werden, sind bekannt. Bei diesen Effektmaterialien, z. B. Glascabochons wird jedoch die Effektschicht auf der Rückseite des durchsichtigen Materials angebracht. Dadurch ergibt sich eine farbige Wirkung des Effektmaterials, eine reproduzierbare imitierte Struktur innerhalb des Materials kann damit jedoch nicht erreicht werden.

Aufgabe der vorliegenden Erfindung ist es somit, neue Effektmaterialien mit verbesserter optischer Wirkung zu schaffen, mit denen sowohl Naturstrukturen, wie z. B. von Cpal oder Tigerquarz, imitiert werden können, aber auch Phantasiestrukturen dargestellt werden können.

Die der Erfindung zugrunde liegende Aufgabe wird gelöst duch ein Effektmaterial, das aus mindestens zwei Schichten eines durchsichtigen Materials versehen mit einer Effektschicht besteht.

Mit dem erfindungsgemäßen Effektmaterial lassen sich sehr gut Naturstrukturen imitieren und insbesondere ergeben sich bei Verwendung verschiedener Farbschichten aus jedem Blickwinkel andere Farbspiele, wodurch z. B. Halbedelsteine besonders gut dargestellt werden können. Ein weiterer Vorteil liegt darin, daß das Effektmaterial absolut reproduzierbar ist.

Nach einer bevorzugten Ausführungsform besteht die Effektschicht aus einer Druckfarbenschicht. Mit dieser Ausführungsform werden z. B. Halbedelsteine, wie besonders Opal, Tigerquarz, Lapislazuli oder Jade gut imitiert, es können aber auch andere Strukturen dargestellt werden.

Gemäß einer alternativen bevorzugten Ausführungsform besteht die Effektschicht aus Bedampfungsschichten. Durch die Interferenz dieser Schichten je nach Blickwinkel können damit besondere optische Effekte erzielt werden.

Besonders geeignet sind auch Effektschichten aus zerkleinerter gefärbter Kunststoffolie. Damit können besonders gut Opalimitationen dargestellt werden.

Zur Erzielung besonderer optischer Effekte können verschiedene Farben vorgesehen werden. Vorzugsweise werden verschiedenfarbige Schichten passergenau übereinander angeordnet.

Als durchsichtiges Material wird vorzugsweise Glas verwendet.

Die Effektmaterialien können nicht nur in Form von Schmucksteinen gestaltet werden, sondern beliebige andere Formen aufweisen. Beispiele sind Zifferblätter für Uhren oder figürliche Darstellungen.
Als durchsichtige Materialschicht werden Glasschichten
mit einer Dicke von etwa 0,2 mm oder Kunststoffschichten
(z. B. aus Acrylglas) bevorzugt.

Die Effektschicht wird nach einer Ausführungsform
der Erfindung durch einen Farbdruck aufgebracht.

Eine bevorzugte Drucktechnik zum Aufbringen der
Effektschicht auf transparente Kunststoffolien ist
das Offset-Verfahren. Tampon- oder Siebdruck kann
vorzugsweise bei Trägerschichten aus Glas Verwendung
finden. Beim Tampondruck werden auf 1 $mm^2$ bis zu
100 Punkte aufgedruckt. Beim Siebdruck sind es bis
zu 40 pro $mm^2$. Bei Anwendung des Tampondruckes sind
die einzelnen Farbpunkte jeweils im Minimum $= \frac{1}{100}$ mm.

Um die gewünschte Naturstruktur möglichst genau zu
imitieren, wird von dem gewünschten Original (z. B.
einem geschliffenen Opal oder von Halbedelsteinen)
ein Diapositiv angefertigt. Mittels Scanner werden
die Farbauszüge angefertigt. Diese gerasterten Farbauszüge, meistens sind es 4, dienen zur Herstellung
eines 4-Farben-Satzes für das jeweilige Druckverfahren.

Die bedruckten Schichten sind einheitlich gerastert,
sie müssen passergenau angeordnet werden, damit bei
senkrechter Betrachtung der waagerecht liegenden
Objekte die gleiche optische Wirkung wie beim gewünschten natürlichen Original auftritt.

Neben dem Druckverfahren kann (können) die Effektschicht(en) auch durch Bedampfen im Hochvakuum in
an sich bekannter Weise aufgebracht werden.

Ein bevorzugtes Bedampfungsverfahren ist derart, daß
Metall- oder Metalloxidschichten durchlässig, d. h.
nicht deckend aufgebracht werden, wodurch bei der Verwendung von mehreren Effektschichten jede dieser Schichten optisch zur Wirkung kommt.

Alternativ können Rasterpunkte in Form einer Bindemittelstruktur aufgedruckt und danach mit Farbpigmenten besiebt werden. Die Farbpigmente haften an den
mit Bindemitteln versehenen Rasterpunkten, die
restlichen ungebundenen Farbpigmente werden entfernt.
Dieses Verfahren eignet sich besonders für gröbere
Partikel, da dieses Problem drucktechnisch schwer
zu handhaben ist. In diesem Fall werden statt Farbpigmente Kunststoffolienpartikel verwendet. Zu diesem
Zweck wird Kunststoffolie eingefärbt und zerkleinert,
z. B. fein gehäckselt. Diese Partikel werden dann
mittels eines Bindemittels nach dem oben beschriebenen
Verfahren auf das durchsichtige Material aufgebracht.

Um eine strukturierte Effektschicht zu erhalten, kann
auch eine strukturierte Bedampfung vorgenommen werden.
Dies erfolgt entweder, indem ein Trennmittel strukturiert aufgebracht wird, danach die Effektschicht
aufgedampft wird und anschließend die restliche
Trennschicht samt Bedampfung in einem Lösungsbad abgelöst wird,
oder eine strukturierte Abdeckschicht aufgebracht
wird oder eine Maske mit der gewünschten Struktur
aufgebracht wird, durch welche dann die Bedampfung
erfolgt.

Für die Effektschichten werden vorzugsweise vier
Farben verwendet, nämlich die Farben Rot, Blau und
Gelb, sowie Schwarz für die Tiefe. Auf einer Ebene der Effektschicht wird in der Regel eine Farbe aufgebracht, das Aufbringen von zwei Farben auf einer Ebene ist jedoch ebenfalls möglich.

Besonders gute optische Wirkungen werden erzielt, wenn mehrere durch jeweils eine durchsichtige Materialschicht getrennte Effektschichten mit verschiedenen Farben verwendet werden. Da in jeder Effektschicht die einzelnen Farbpigmente (oder Kunststoffolienpartikel) anders angeordnet sind, d. h. für jede Ebene dasselbe Raster verwendet wird, und diese Schichten passergenau übereinander angeordnet werden, ergeben sich aus den verschiedenen Blickwinkeln jeweils andere Farbspiele. Diese optische Wirkung wird noch verstärkt, wenn in den Effektschichten lasierende also nicht deckende Farben verwendet werden. Da bei dieser Farbanordnung eine Farbe durch die darüberliegende Farbe der nächsten Effektschicht hindurchschimmert, erscheint optisch eine dritte Farbe (z. B. ergeben durch eine blaue Farbschicht hindurchschimmernde gelbe Farbpigmente einen grünen Farbton). Durch diese Farbwahl lassen sich z. B. die Naturstrukturen von Opalen sehr gut imitieren. Auch Kombinationen von verschiedenen Farbschichten wie transparente und deckende Farbschichten oder transparente und deckende Bedampfungsschichten können verwendet werden.

Die durchsichtige Materialschicht aus Glas oder Acrylglas kann auch selbst farbig sein, um die optische Wirkung des Effektmaterials zu variieren.

Den unteren Abschluß des Effektmaterials bildet vorzugsweise ein Grundträger, der beliebig stark sein kann. Auch für dieses Grundmaterial können verschiedene Farben gewählt werden. Dieser Grundträger wird vorzugsweise auf der Unterseite mit einer Reflektions- oder Abdeckschicht versehen, die entweder eine metallische Schicht oder eine Farbschicht oder schwarzes Glas sein kann. Damit wird vermieden, daß der Untergrund auf den das Effektmaterial aufgebracht wird, durch das Material hindurchscheint und dessen optische Wirkung beeinträchtigt.

Als oberer Abschluß des Effektmaterials kann eine Wölbung gewählt werden, d. h. um z. B. einen gewölbten Opal zu imitieren, wird ein gewölbtes durchsichtiges Teil auf das Effektmaterial aufgesetzt.
Die Wölbung kann aber auch drucktechnisch auf einer planen Fläche optisch dargestellt werden, indem gewölbte echte Schmucksteine mit ihren charakteristischen Reflexen für die Herstellung des Diapositives verwendet werden.

Der Grundträger, die durchsichtige(n) Materialschicht (en) mit der (jeweiligen) Effektschicht und eventuell der gewölbte Teil werden mittels eines transparenten Klebers (z. B. UV-Klebstoff, Epoxiklebstoff) zusammengeklebt. Auch der Klebstoff kann eingefärbt eine Farbschicht darstellen.

Bei der Herstellung der Effektmaterialien werden z. B. Platten aus dem durchsichtigen Material (Glas) in einer Größe von 5 x 5 cm zugeschnitten, in der gewünschten Weise mit der Effektschicht versehen und aufeinander geklebt. Aus dem so vorbereiteten Strukturaufbau werden anschließend die Teile der Effektmaterialien in der gewünschten Größe herausgeschnitten. Bei der Verwendung von transparenten Kunststoffolien wird wie folgt verfahren:

1. Die Farben werden einzeln   von Rolle zu Rolle
mit Passerkreuz gedruckt und
2. die bedruckten Folien werden passergenau kaschiert.

Die vorliegende Erfindung wird nun anhand der beigefügten Zeichnungen, die beispielhafte Ausführungsformen zeigen, näher erläutert.
Es zeigen:
Fig. 1 einen Querschnitt durch das Effektmaterial;
Fig. 2 einen vergrößerten Ausschnitt davon zur Verdeutlichung der Anordnung der Effektpartikel.

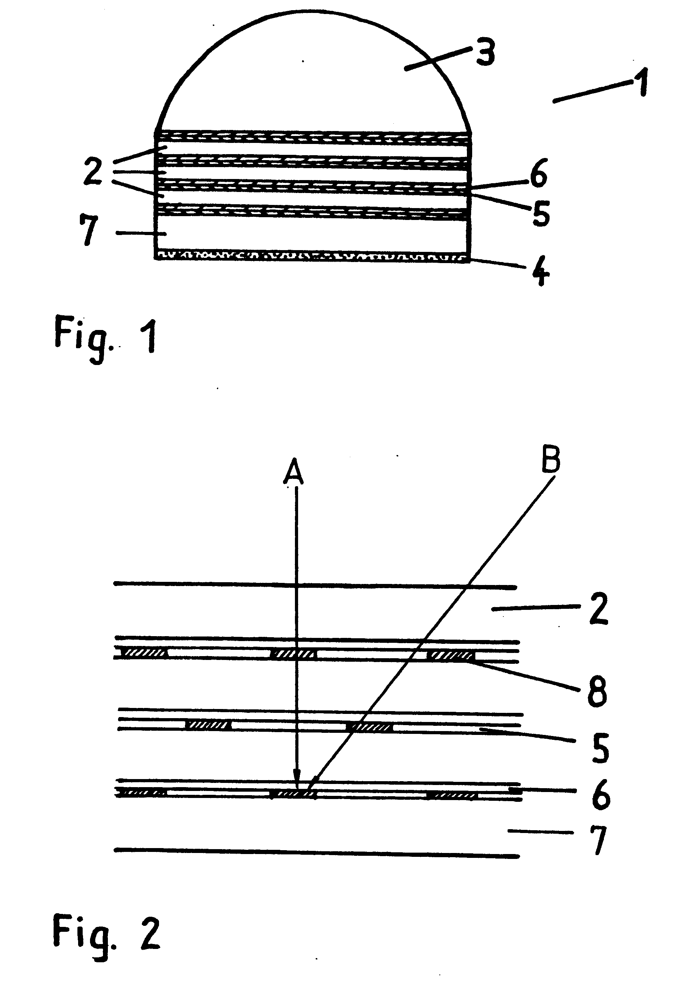

In Figur 1 ist der Aufbau einer Ausführungsform der
vorliegenden Erfindung erläutert. Das Effektmaterial
1 besteht aus mehreren Schichten  2  aus durchsichtigem Material, z. B. Weißglas, jeweils dazwischen
liegt eine farbige Effektschicht  5 , die entweder
aufgedruckt, aufgedampft oder auf andere Weise aufgebracht wurde.

Die Schichten aus durchsichtigem Material  2  mit der
jeweiligen Effektschicht  5  sind mittels einer transparenten Klebstoffschicht  6 , z. B. aus UV- oder
Epoxiklebstoff verbunden. Als oberer Abschluß des
Effektmaterials  1  ist ein gewölbter Teil  3  mittels
des gleichen Klebstoffes  6  aufgebracht. Ein Grundträger  7 , der ebenfalls aufgeklebt wird, bildet den
Abschluß des Effekmaterials  1 . Dieser Grundträger  7
ist entweder selbst deckend (schwarzes Glas) oder mit
einer Abdeck- oder Reflektionsschicht  4  versehen.

In Figur 2 ist ein vergrößerter Ausschnitt des Effektmaterials gezeigt. Aus dieser Figur wird deutlich,
daß die Anordnung der Effektpartikel  8  in den
Effektschichten  5  unterschiedlich gewählt ist.

Dadurch entstehen beim Betrachten des Effektmaterials aus verschiedenen Blickwinkeln A, B unterschiedliche Farbspiele in dem Effektmaterial.

## Effektmaterial

1. Effektmaterial, dadurch gekennzeichnet, daß es aus mindestens zwei Schichten eines transparenten Materials besteht, die jeweils mit einer strukturierten und gerasterten Effektschicht versehen sind.

2. Effektmaterial nach Anspruch 1, dadurch gekennzeichnet, daß die Effektschicht eine Druckfarbenschicht ist.

3. Effektmaterial nach Anspruch 1, dadurch gekennzeichnet, daß die Effektschicht eine Interferenzfarbschicht ist.

4. Effektmaterial nach Anspruch 1, dadurch gekennzeichnet, daß die Effektschicht aus zerkleinerter gefärbter Kunststoffolie besteht.

5. Effektmaterial nach einem der Ansprüche 1 bis 4, dadurch gekennzeichnet, daß mehrere Effektschichten in verschiedenen Farben vorgesehen sind.

6. Effektmaterial nach Anspruch 5, dadurch gekennzeichnet, daß die verschiedenen Effektschichten passergenau angeordnet sind.

7. Effektmaterial nach einem der Ansprüche 1-6, dadurch gekennzeichnet, daß das durchsichtige Material aus Glas oder Kunststoff besteht.

Fig. 1

Fig. 2